# EUROPEAN PATENT APPLICATION

(11) **EP 4 574 853 A1**
(43) Date of publication of application: **25.06.2025**
(21) Application number: 23219348.2
(22) Date of filing: 21.12.2023
(51) Int. Cl.: C08F 222/10, C04B 24/26, C04B 40/06, C08F 4/40, C09J 4/00, F16B 13/14

(54) **HARDENER SYSTEM FOR RADICALLY HARDENING REACTIVE RESINS USED IN CHEMICAL FASTENING**

(71) Applicant: Hilti Aktiengesellschaft, 9494 Schaan (LI)
(72) Inventor: Bürgel, Thomas, 86899 Landsberg (DE); Lavaux, Valentine, 68440 Habsheim (FR)
(74) Representative: Hilti Aktiengesellschaft Corporate Intellectual Property

(57) **Abstract**

The present invention relates to a hardener system for a reactive resin system which contains radically polymerizable compounds, wherein the hardener system comprises at least one compound of Formula (I) and/or compound of Formula (II), at least one compound of Formula (III) and at least one transition metal in the form of a salt or a compound/ complex, a reactive resin system containing this hardener system and a multi-component reactive resin system containing this hardener system, and the use thereof, in particular for chemical fastening.

## Description

The present invention relates to a hardener system for a reactive resin system which contains radically polymerizable compounds, wherein the hardener system comprises at least one compound of Formula (I) and/or compound of Formula (II), at least one compound of Formula (III) and at least one transition metal in the form of a salt or a compound/ complex, a reactive resin system containing this hardener system and a multi-component reactive resin system containing this hardener system, and the use thereof, in particular for chemical fastening.

The use of reactive resin mixtures based on radically polymerizable compounds has long been known. In the field of fastening technology, the use of reactive resin mixtures as organic binders has gained acceptance in chemical fastening technology. These are often two-component systems, wherein the A component contains the reactive resin mixture and the B component contains the hardening agent. Other common constituents such as fillers, accelerators, stabilizers thixotropic agents, phlegmatizers, solvents, including reactive solvents, can be contained in one and/or the other component. By mixing the two components, the reaction is then initiated by radical formation and the resin is hardened to form duromers.

Radically hardening systems, in particular systems which cure at room temperature, require so-called radical starters, also called initiators, so that the radical polymerization can be triggered. In the field of chemical fastening technology, the hardener composition described in application DE 3226602 A1, comprising benzoyl peroxide as a radical starter and an aminic compound as an accelerator, and the hardener composition described in the application EP 1586569 A1, comprising a perester as a hardener and a metal compound as an accelerator, have gained acceptance because of their properties. These hardener compositions allow rapid and quite complete curing even at very low temperatures down to -30°C. In addition, these systems are very robust with regard to the mixing ratios of reactive resin and hardener. Thus, they are suitable for use under construction site conditions.

However, a disadvantage of these hardener compositions is that peroxides are used as radical starters in both cases. These are thermally sensitive and react very sensitively to impurities. This leads to considerable limitations in the formulation of pasty hardener components, primarily for injection mortars with respect to storage temperatures, storage stability and the selection of suitable components. To enable the use of peroxides, such as dibenzoyl peroxide, peresters and the like, phlegmatizers, such as phthalates or water, are added to stabilize them. However, these significantly impair the mechanical performance of reactive resin mixtures when used, for example as reaction resin mortars for chemical fastening.

Furthermore, these known hardener compositions are disadvantageous insofar as they have to contain peroxide amounts of 0.5 weight % and greater, which is problematic, because peroxide-containing products, starting at a concentration of 1%, for example for dibenzoyl peroxide, have to be labeled as sensitizing in some countries. The same applies to the aminic accelerators, which are sometimes also subject to labeling.

Until now, a few attempts have been made to reduce the amount of peroxide in such a way that it falls below the labeling limit, or to do without the use of peroxides as radical initiators.

DE 102010051818 B3 discloses compositions for chemical fastening, the peroxide quantity of which was reduced. A disadvantage of these compositions is that the load values achievable therewith are not particularly high.

DE 102011078785 A1 describes compositions for chemical fastening which use a peroxide-free hardener system based on 1,3-dioxo compounds as hardeners and a manganese compound as a co-initiator. Although peroxides can be dispensed with, these compositions have the disadvantage that they exhibit a high temperature dependence during hardening. Although the hardener system leads to good curing of the compositions at room temperature and at elevated temperatures, the hardening reaction at low temperatures is too slow or comes to a complete halt, so that the curing is insufficient or is totally lacking.

US 2016/0040026 A1 describes peroxide free curable compositions for use as adhesives comprising free-radically polymerizable compounds, a beta-dicarbonyl compound and an oxide of copper. US2018/0179304 A1 discloses a hardener system for a synthetic resin composition which includes free-radical-polymerisable compounds comprising a metal salt, an aldehyde and/or ketone, a primary amine, and an imine.

Alternative systems using peroxides have been described in JP2005054052 wherein a curing agent is disclosed comprising tertiary alkylperoxy-branched alkyl ester, cobalt and α-acetylbutyrolactone. US2017/0247547 A1 discloses free-radically curable adhesives comprising organic peroxide, polyvalent metal compound and a quarternary ammonium halide. US2016039960 describes a reactive resin composition comprising dialkyl peroxide, amine, copper and 2-acetylbutyrolactone. WO2019/197190 A1 discloses use of saccharin in combination with aldimine and copper for the hardening system of radically polymerizable compositions.

There is therefore a need for a hardener system for reactive resin systems based on radically polymerizable compounds for use as reaction resin mortars, in particular for chemical fastening, which does not have the disadvantages of the known hardener systems and which, however, does not negatively influence the positive properties of the reactive resin mortars.

More precisely, there is a need for a hardener system for reactive resin systems based on radically polymerizable compounds for chemical fastening, with which mortars can be provided, which can be formulated low-labeled or label-free, which have workable curing times that are suitable for chemical anchor application, curing of which is less temperature-dependent than the known hardener systems and with which a better bonding of the cured mortar compositions to the substrate and thus a higher load level of a fastening arrangement can be achieved.

The object of the present invention is now to provide a hardener system for a reactive resin system based on radically polymerizable compounds for use in reactive resin mortars for the chemical fastening of anchoring means which dispenses with the use of peroxides, peresters, perketals or hydroperoxides, and therefore is labeled less critically, thereby enabling the formulation of label-free products, and nevertheless has the advantageous properties of the peroxide-containing hardener systems from the prior art, such as workable curing times, achieving a high load level and a largely temperature-independent curing.

This object is achieved by providing a hardener system according to claim 1 which is free of peroxides, peresters, perketals and hydroperoxides.

Surprisingly, it has been found that by using at least one compound of Formula (I), at least one compound of Formula (III) together with at least one metal-based activator, hardener systems can be formulated which can be used as hardeners for radically hardening resins, as are used in chemical dowels. The peroxides used to date, which, among other things, lead to the labeling of the mortar compositions, can thus be replaced by label-free compounds, without having to dispense with the advantageous properties of the peroxides, such as workable curing times, curing that is largely temperature-independent and high load levels.

By dispensing with the use of peroxides, peresters, perketals or hydroperoxides, the hardener systems according to the invention have a number of further advantages compared to the systems known from the prior art. For example, there are no safety-relevant limitations with respect to transport and storage of the components, in particular no labeling as oxidizing. Furthermore, it is possible to dispense with the use of phlegmatizers, which as plasticizers influence the mechanical performance of the cured reaction resins. In addition, less limitations with regard to the further recipe components have to be taken into account in the formulation of multi-component reaction resin compositions.

A first subject matter of the invention is a hardener system according to claim 1. A second subject matter of the invention is a use of the hardener system according to the invention as an initiator system for a reactive resin system based on radically polymerizable compounds according to claim 12. A third subject matter of the invention is a reactive resin system which contains a radically polymerizable compound as a reactive resin and the hardener system according to the invention, according to claim 14. A fourth subject matter of the invention is a multi-component reactive resin system comprising a resin component and a hardener component according to claim 17. A fifth subject matter of the invention is the use of a reactive resin system according to the invention or of a multi-component reactive resin system according to the invention as an adhesive, coating material or molding compound according to claim 19. A sixth subject matter of the invention is the use of a reactive resin system according to the invention or of a multi-component reactive resin system according to the invention for fastening anchoring means in substrates according to claim 20.

Within the meaning of the invention:
- "=", in designations such as C=O, S=O, or O=S=O, indicates a double bond between, for example, C and O (i.e. carbon and oxygen);
- *"inhibitor"* means a substance which suppresses unwanted radical polymerization during the synthesis or storage of a resin or a resin-containing composition (these substances are also referred to in the art as *"stabilizers"),* or which delays radical polymerization of a resin (usually in conjunction with an accelerator or activator) after an initiator has been added (these substances are also referred to in the art as *"inhibitors";* the particular meaning of the term becomes clear from the context);
- *"initiator,"* "*hardener*" or *"hardening agent'* means a substance which (usually in combination with an accelerator) forms reaction-initiating radicals;
- "*activator*" means a substance which reacts with the initiator so that larger quantities of radicals are prepared by the initiator even at low temperatures, or which catalyzes the decomposition reaction of the initiator;
- "*co*-*activator*" means a substance whose presence enhances the reaction of the hardener with the activator.
- *"hardener system,"* means a combination of the actual hardening agent (initiator) and activator and in some cases a further activator (co-activator);
- *"hardener component*" means a liquid or viscous mixture of the hardening agent, optionally further components, e.g., co-activator, fillers, additives; typically, the hardener composition is one of the two components of a two-component reactive resin system for chemical fastening (in a multi-component system also referred to as a *"hardener composition");*
- *"peroxide-free"* means that no peroxides, peresters, perketals, or hydroperoxides are added;
- *"reactive resin"* means a usually solid or high-viscosity "*radically polymerizable*," i.e., curable, compound, which cures by means of polymerization and forms a resin matrix; the reactive resin is the reaction product of a bulk reaction per se; this also includes the reaction batch for producing the backbone resin after the reaction has ended, which backbone resin is present without the product being isolated and therefore can contain the reactive resin, a reactive diluent, a stabilizer and a catalyst, if used, in addition to the radically polymerizable compound;
- *"reactive diluents"* means liquid or low-viscosity monomers and backbone resins which dilute other backbone resins or the reactive resin master batch and thereby impart the viscosity necessary for application thereof, which contain functional groups capable of reacting with the reactive resin, and which for the most part become a constituent of the hardened composition (e.g., of the mortar) during polymerization (hardening); reactive diluents are also referred to as copolymerizable monomers;
- *"reactive resin mixture"* means a liquid mixture of reactive resin, reactive diluents and optionally further components, such as activator and inhibitors, which mixture is formulated by addition of fillers and further additives, for example rheological aids to the reactive resin component.
- *"reactive resin component* means a liquid or viscous mixture of reactive resin, fillers, optionally at least one reactive diluent and optionally further components, for example additives such as rheological additives, adhesion promoters, activators and/or inhibitors; typically, the reactive resin component is one of the two components of a two-component reactive resin system for chemical fastening (also referred to as *"reactive resin composition");*
- *"reactive resin system"* means a liquid or viscous mixture of reactive resin, optionally at least one reactive diluent, fillers and optionally further components, as described for the reactive resin composition. In addition, the reactive resin system contains the hardener, in some cases at least one reactive or non-reactive diluent, and also fillers and additives, such as rheological additives, adhesion promoters, (co-)activators and/or inhibitors.
- *"two-component reactive resin system"* means a reactive resin system comprising two separately stored components, a reactive resin component (A) and a hardener component (B), so that a hardening of the backbone resin contained in the reactive resin component takes place after the mixing of the two components;
- *"multi-component system"* or *"multi-component reactive resin system"* means a reactive resin system comprising a plurality of separately stored components, including a reactive resin component (A) and a hardener component (B), so that the reactive resin contained in the reactive resin component is hardened only after all of the components are mixed;
- "*(meth)acryl...*/*...(meth)acryl...*" means both the "methacryl.../...methacryl..." and the "acryl.../...acryl..." compounds; "methacryl.../...methacryl..." compounds are preferred in the present invention;
- *"epoxy (meth)acrylate"* means a compound which has acrylate or methacrylate groups and is substantially free of epoxy groups;
- *"alkyl"* means a saturated hydrocarbon functional group that can be branched or unbranched; preferably a C₁-C₇ alkyl, particularly preferably a C₁-C₄ alkyl, i.e., an alkyl selected from the group consisting of methyl, ethyl, n-propyl, iso-propyl, n-butyl, iso-butyl, and tert-butyl; methyl, ethyl and tert-butyl are particularly preferred and methyl is very particularly preferred;
- *"hydroxyalkyl"* means an alkyl carrying at least one hydroxyl group as a substituent;
- "*alkenyl*" means an unsaturated hydrocarbon functional group having at least one double bond, which can be branched or unbranched; preferably a C₂-C₂₀ alkenyl, particularly preferably a C₂-C₆ alkenyl; i.e., an alkenyl selected from the group consisting of ethenyl, propenyl, butenyl, pentenyl and hexenyl; ethenyl, propenyl and butenyl are particularly preferred, and ethenyl is very particularly preferred;
- *"cold curing"* means that a reactive resin system can cure completely at room temperature;
- "a" *or "an"* as the article preceding a class of chemical compounds, e.g., preceding the word "enamine," means that one or more compounds included in this class of chemical compounds, e.g., various enamines, may be meant. In a preferred embodiment, this article means only a single compound;
- *"at least one"* means numerically *"one or more."* In a preferred embodiment, the term numerically means "one";
- "contain", "comprise" and "include" mean that further constituents may be present in addition to those mentioned. These terms are intended to be inclusive and therefore also encompass *"consist of." "Consist* of' is intended to be exclusive and means that no further constituents may be present. In a preferred embodiment, the terms "contain", "comprise" and "include" mean the term "consist of";
- "*approximately*" or *"approx."* before a numerical value means a range of ±10% of this value, preferably ±2% of this value, more preferably ±1% of this value, particularly preferably ±0% of this value (i.e., exactly this value).

All standards cited in this text (e.g., DIN standards) were used in the version that was current on the filing date of this application.

### Hardener system

Present invention relates to a **hardener system** for a reactive resin system which contains radically polymerizable compounds, wherein the hardener system comprises:
a) at least one compound of Formula (I) 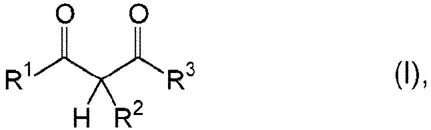
   wherein R¹ is unbranched or branched, preferably substituted, C₁-C₄-alkyl group or C₁-C₄-alkoxy group,
   wherein R³ is unbranched or branched, preferably substituted, C₁-C₄-alkyl group, C₁-C₄-alkoxy group or 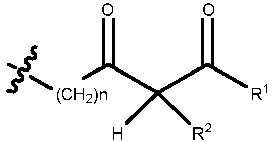
   wherein n=1, 2, 3, 4,
   R² is an unbranched or branched, optionally substituted C₁-C₄-alkyl group or C₁-C₄-alkoxy group, or R² together with R₁ or R₃ forms an optionally substituted five- or six-membered aliphatic ring, which optionally comprises at least one heteroatom in or on the ring;
b) at least one compound of Formula (III) 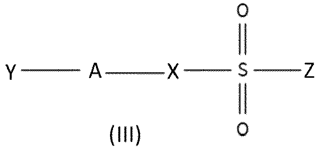
   wherein independently from each other Y is an aromatic ring, optionally substituted at up to five positions by at least one C1-C6 alkyl group, or at least one alkoxy group, or at least one halo group, or combinations of two or more thereof,
   X is NH, NF, NCI, NBr, Nl, N-formyl, N-methacryl, or N⁻(cation),
   wherein cation is selected from the cation of lithium, sodium, potassium, calcium, or combinations of two or more thereof,
   A is C=O, S=O or O=S=O, and
   Z is an aromatic ring, optionally substituted at up to five positions by at least one C1-C6 alkyl group, or at least one alkoxy group, or at least one halo group, or combinations of two or more thereof; or wherein Y and Z are joined together in the same aromatic ring or ring structure; and
c) at least one transition metal in the form of a salt, a compound, a complex or a mixture of two or more thereof.

In content of the present invention compound of Formula (I) and/or compound of formula (II) can be considered as a hardener.

It is preferred that the compound of Formula (I) is a compound of Formula (II) 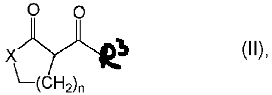 in which independently
X = C, O,
n = 1, 2 and
R³ is a straight-chain or branched, optionally substituted C₁-C₄-alkyl group or a C₁-C₄-alkoxy group.

It is preferred that the compound of Formula (II) is selected from the group consisting of α-acetylcyclopentanone, α-acetylbutyrolactone, ethyl cyclopentanone-2-carboxylate, methyl cyclopentanone-2-carboxylate, 3-methyl-2,4-pentanedione, 2-methyl-1,3-cyclopentanedione or a mixture of two or more thereof.

It is also preferred that the compound of Formula (I) is selected from the group consisting of 3-methyl-2,4-pentanedione, 1,4-bis(tetrahydro-2-oxo-3-furanyl)-butan-1,4-dion (diABL) or a mixture thereof.

It is preferred that the hardener system of the present invention comprises at least one comound of Formula (I) and/or at least one compound of Formula (II) acording to any one of embodiments as disclosed herewith.

It is preferred that the amount of the at least one compound of Formula (I) and/or the compound of Formula (II) is in the range of from 5 to 80 weight-%, more preferably in the range of from 20 to 75 weight-%, more preferably from 50 to 70 weight-% based on the total weight of the hardener system.

In content of the present invention compound of Formula (III) can be described as co-activator.

It is preferred that in compound of Formula (III), Y is a phenyl, or biphenyl, or diphenyl methane or diphenyl isopropane, optionally substituted at up to five positions by at least one C1-C6 alkyl group, or at least one alkoxy group, or at least one halo group, or combinations of two or more thereof, preferably Y is phenyl or an alkyl substituted phenyl.

It is preferred that X is NH, NBr, N-formyl, N-methacryl, or N⁻(cation), wherein the cation is sodium or calcium.

It is preferred that in compound of Formula (III), A is C=O or O=S=O.

It is preferred that Z is a phenyl, or biphenyl, or diphenyl methane or diphenyl isopropane, optionally substituted at up to five positions by at least one C1-C6 alkyl group, or at least one alkoxy group, or at least one halo group, or combinations of two or more thereof, preferably Z is phenyl or an alkyl substituted phenyl.

In one embodiment, it is preferred that Y and Z are joined together in the same aromatic ring structure, such as structures A through H below:

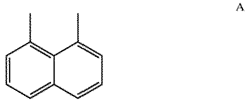

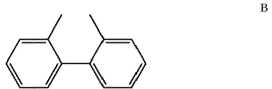

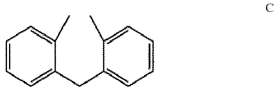

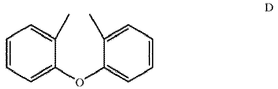

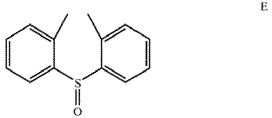

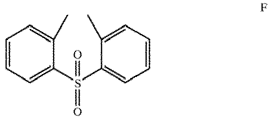

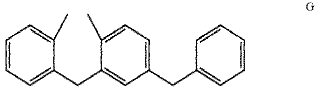

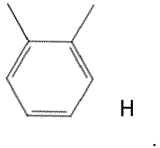

It is preferred that the compound of Formula (III) is selected from the group consisting of 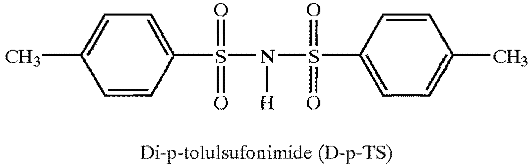 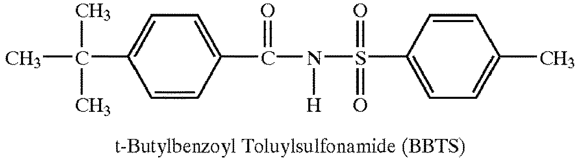 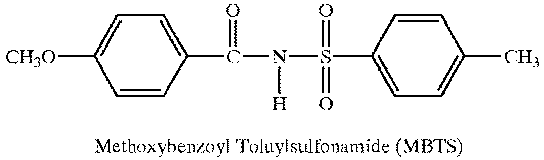 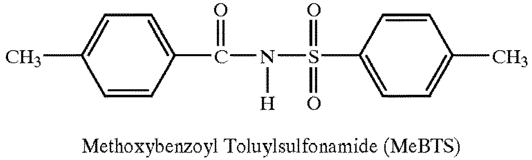 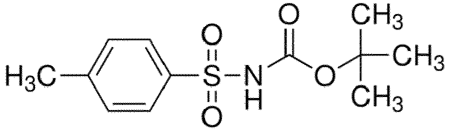 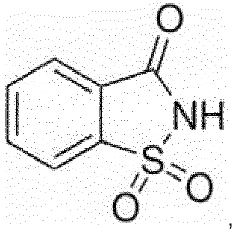 N-formylsaccharin, saccharin methacrylamide, N-fluorosaccharin, N-chlorosaccharin, N-bromosaccharin, N-iodosaccharin, lithium saccharin, sodium sacchrin, potassium saccharin, calcium saccharin, or a mixture of two or more thereof, more preferably selected from the group consisting of saccharin, N-formylsaccharin, saccharin methacrylamide, N-bromosaccharin or a mixture of two or more thereof.

It is preferred that the compound of Formula (III) is selected from the group consisting of saccharin, derivatives and/or salts thereof, preferalby selected from from a group comprising of saccharin, N-formylsaccharin, saccharin methacrylamide, N-fluorosaccharin, N-chlorosaccharin, N-bromosaccharin, N-iodosaccharin, lithium saccharin, sodium sacchrin, potassium saccharin, calcium saccharin, or a mixture of two or more thereof, more preferably selected from the group consisting of saccharin, N-formylsaccharin, saccharin methacrylamide, N-bromosaccharin, or a mixture of two or more thereof. It is preferred that the compund of Formula (III) is saccharin.

It is preferred that the amount of the compound of Formula (III) is in the range of from 0.001 to 50 weight-%, more preferably in the range of from 1 to 25 weight-%, more preferably in the range of from 2 to 15 weight-%. based on the total weight of the hardener system
The initiation of the polymerization and thus the hardening of the reactive resins is based on first reaction of co-activator with an activator. The activator in turn is then able to activate the hardener through a redox reaction. Suitable activators are transition metals in the form of salts and compounds, which also includes oxides and complexes.

It is preferred that the at least one transition metal is selected from the gorup consisting of copper, iron, vanadium, manganese, cerium, cobalt, zirconium, bismuth, or a mixture of two or more thereof.

It is preferred that at least one transition metal is in the form of a metal salt, which also includes metal complexes and metal oxides, these are preferably one or more metal salts or in particular one or more salts of organic and/or inorganic acids with metals. In particular, the metal salts are selected from the group consisting of vanadium, iron, manganese and copper, in particular in the form of salts or complexes with inorganic acid residues, such as sulfate and/or carbonate residues and/or organic acid residues, for example carboxylate residues, wherein the organic acids are straight-chain or branched and preferably saturated, such as carboxylates with CH₃, C₂-C₂₀-alkyl, a C₆-C₂₄-aryl radical or C₇₋C₃₀-aralkyl radical, for example octoate, for example 2-ethylhexanoate (isooctanoate), neodecanoate, or acetylacetonate. Particular preference is given to salts which are soluble in organic media, such as carboxylates, for example octanoates, naphthenates, acetylacetonates, acetates and quinolates. Manganese, vanadium, cobalt and copper carboxylates are very particularly preferred.

The transition metals are reactively different. Reactivity depends on different factors, such as the oxidation potential thereof, the salts and compounds used, in some cases also on the form in which the transition metals are present, for example in solutions, wherein the solvent can also influence the reactivity. When using less reactive transition metal salts and compounds which have a lower activity, such as, for example, iron and copper salts and compounds, a further activator (co-activator) is required, so that the initiator system has sufficient activity in order to be able to initiate the radical polymerization under construction site conditions.

It is preferred that the amount of the at least one transition metal is in the range of from 0.001 to 50 weight %, more preferably in the range of from 0.05 to 40 weight %, preferably 0.1 to 30 weight %, preferably 0.3 to 20 weight % based on the total weight of the reactive resin system.

For the hardener system according to the invention, in particular when copper is used as activator, phenols, such as butylhydroxytoluene, hydroquinone, pyrocatechol and their alkylated or etherified derivatives (e.g., tert-butylpyrocatechol or hydroquinone monomethyl ether), phosphites such as triethyl or triphenyl phosphate), phthalimide, and the like, are suitable coactivators for hardener system according to the invention.

It is preferred that the hardener system of the present invention comprises at least one amine, more preferably at least one aromatic amine, more preferably at least one tertiary aromatic amine.

Conceivable also as a co-activation in some cases are the amines typically used in fastening systems, for example dimethylamine, trimethylamine, diethylamine, triethylamine, di-n-propylamine, tri-n-propylamine, diisopropylamine, triisopropylamine, di-n-butylamine, diisobutylamine, tri-isobutylamine, diisopentylamine, diethanolamine, triethanolamine, dimethyl(2-chloroethyl)amine, bis(2-chloroethyl)amine, bis(2-ethylhexyl)amine, N-methylstearylamine, dialkylamine, N,N'-dimethylethylendiamine, permethyldiethylentriamine, trimethylhexamethylendiamine, N,N-dimethylaminoethanol, 2-(2-diethylaminoethoxy)ethanol, tris-[2-(2-hydroxy-ethoxy)-ethyl]amine, 3-dimethylamino-1-propanol, 1-diethylamino-2-propanol, diisopropanolamine, methyl-bis(2-hydroxypropyl)amine, tris(2-hydroxypropyl)amine, 5-diethylamino-2-pentanone, 3-methylaminopropionic acid nitrile, N-methylcyclohexylamine, N,N-dimethylcyclohexylamine, dicyclohexylamine, N-ethylcyclohexylamine, N-(2-hydroxyethyl)-cyclohexylamine, N,N-bis-(2-hydroxyethyl)-cyclohexylamine, N-methylaniline, N,N-dimethylaniline, N,N-diethylaniline, N,N-di-propylaniline, diphenylamine, N-hydroxyethylaniline, Bis(N-hydroxyethyl)aniline, dibenzylamine, tribenzylamine, methyldibenzylamine, N,N-diisopropylaniline, N-dodecylaniline, N-methylaminonaphthaline, N,N-dimethylaminonaphthaline, N,N-dibenzylnaphthaline, morpholine, N-methylmorpholine, N-phenylmorpholine, hydroxyethylmorpholine, N-methylpyrrolidine, pyrrolidine, piperidine, hydroxyethylpiperidine, pyrroles, pyridines, quinolines, indoles, indolenines, carbazoles, pyrazoles, imidazoles, thiazoles, pyrimidine, quinoxaline, dimorpholinethane, [2,2,2]-diazabicyclooctane and N,N-dimethyl-p-toluidine.

Preferred amines are symmetrically or asymmetrically substituted aniline and toluidine derivatives and N,N-bis(hydroxy)alkylarylamines, such as N,N-dimethylaniline, N,N-diethylaniline, N,N-dimethyl-p-toluidine, N,N-bis(hydroxyalkyl)arylamines, N,N-bis(2-hydroxyethyl)aniline, N,N-bis(2-hydroxyethyl)toluidine, N,N-bis(2-hydroxypropyl)aniline, N,N-bis(2-hydroxypropyl)toluidine, N,N-bis(3-methacryloyl-2-hydroxypropyl)-p-toluidine, N,N-dibutoxyhydroxypropyl-p-toluidine, N-methyl-N-hydroxyethyl-p-toluidine, N-ethyl-N-hydroxyethyl-p-toluidine and the analog o- or m-toluidines and 4,4'-bis(dimethylamino)diphenylmethane and/or the leuco forms of the dyes crystal violet or malachite green.

Polymeric amines, such as those obtained by polycondensation of N,N-bis(hydroxyalkyl)aniline with dicarboxylic acids or by polyaddition of ethylene oxide and these amines, are also suitable as accelerators.

It is preferred that the at least one amine comprised in the hardener system of the present invention is N,N-bis(2-hydroxypropyl)toluidine, N,N-bis(2-hydroxyethyl)toluidine, para-toluidine ethoxylate (Bisomer^{®} PTE) or a mixture of two or more thereof.

It is preferred that the amount of at least one amine is in the range of from 0.1 to 50 weight %, more preferably in the range of from 1 to 25 weight %, more preferably in the range of from 2 to 15 weight % based on the total weight of the hardener system.

It is preferred that the hardener system of the present invention comprises at least one filler, preferably at least one alkaline filler.

At least one filler for the purposes of the present invention can be selected from any conventional fillers, preferably mineral or mineral-like fillers, such as quartz, glass, sand, quartz sand, quartz powder, porcelain, corundum, ceramics, talc, silica (e.g. fumed silica, in particular polar, non-after-treated fumed silica), silicates, aluminum oxides (e.g. alumina), clay, titanium dioxide, chalk, barite, feldspar, basalt, aluminum hydroxide, granite or sandstone, polymeric fillers such as thermosets, hydraulically curable fillers such as gypsum, quicklime or cement (e.g. aluminate cement (often also referred to as alumina cement) or Portland cement), metals such as aluminum, carbon black, and also wood, mineral or organic fibers, or the like, or mixtures of two or more thereof. The fillers may be present in any desired shapes, for example as powder, or as shaped bodies, e.g., having a cylindrical, annular, spherical, platelet, rod, saddle or crystal shapes, or else shaped like fiber (fibrillar fillers), and the corresponding base particles preferably have a maximum diameter of approximately 10 mm and a minimum diameter of approximately 1 nm. This means that the diameter is approximately 10 mm or any value less than approximately 10 mm, but more than approximately 1 nm. The maximum diameter is preferably a diameter of approximately 5 mm, more preferably approximately 3 mm, even more preferably approximately 0.7 mm. A maximum diameter of approximately 0.5 mm is very particularly preferred. The more preferred minimum diameter is approximately 10 nm, even more preferably approximately 50 nm, very particularly preferably approximately 100 nm. Diameter ranges resulting from a combination of this maximum diameter and minimum diameter are particularly preferred. However, the globular, inert substances (spherical shape) have a preferred and more pronounced reinforcing effect. Core-shell particles, preferably having a spherical shape, can also be used as fillers.

Preferred fillers are selected from the group consisting of cement, silica, quartz, quartz sand, quartz powder, and mixtures of two or more thereof.

It is particularly preferred that at least one filler is selected from the group consisting of calcium aluminate cement, Portland cement, rock flour, and mixtures of two or more thereof.

It is preferred that the amount of at least one filled, preferably at least one alkaline filler, in the hardening component of the present invention is in the range of from 30 to 90 weight %, more preferably in the range of from 40 to 80 weight %, more preferably in the range of from 50 to 60 weight % based on the total weight of the hardening component.

It has been shown that for the purposes of chemical fastening, in particular for the chemical fastening of anchoring means in boreholes, by means of radically hardening mortar systems, a hardener system based on copper in the form of salts and compounds, in particular carboxylates, 2-acetylbutyllactone and saccharin is very particularly preferred.

The hardener system according to the invention is suitable as an initiator for the radical polymerization and thus for the hardening of reactive resin systems based on radically hardening compounds, so-called reactive resins.

The hardener system according to the invention makes it possible to provide a reactive resin system which, in addition to the hardener system according to the invention, contains a reactive resin and can further contain additives and fillers as further constituents and which is peroxide-free and thus makes labeling less critical, and in the best case no longer necessary. This reactive resin system is particularly suitable for chemical fastening, in particular the chemical fastening of anchoring means in boreholes, because they enable higher load values, also in wet boreholes.

Therefore, a further subject matter of the invention is the use of the hardener system according to the invention as a peroxide-free initiator system for a reactive resin system with radically polymerizable compounds, in particular for chemical fastening.

### Reactive resin system

Present invention further relates to a reactive resin system which contains the hardener system according to the invention, at least one radically polymerizable compound, at least one reactive diluent and in some cases organic and/or inorganic additives and also fillers.

The reactive resin system preferably includes the at least one activator dissolved or dispersed in the reactive resin and in some cases at least one co-activator of the hardener system. Suitable activators and co-activators are described above as constituents of the hardener system.

In the hardener system, the reactive resin system contains at least one compound of formula (I) and/or at least one compound of Formula (II) according to any one embodiment as disclosed herewith in an amount of 0.1 to 25 weight %, preferably 0.2 to 15 weight %, particularly preferably 0.5 to 10 weight % and very particularly preferably 1 to 7 weight %, in each case based on the total weight of the reactive resin system.

If the reactive resin system comprises at least one transition metal according to any one of the embodiments as disclosed herewith, it is contained in an amount of from 0.001 to 10 weight %, preferably from 0.005 to 5 weight %, particularly preferably from 0.01 to 2 weight %, and preferably from 0.1 to 1.5 weight % in each case based on the total weight of the reactive resin system.

If the reactive resin system contains at least one compound of Formula (III) according to any one of the embodiments as disclosed herewith, it is contained in an amount of from 0.001 to 10 weight %, preferably from 0.05 to 8 weight %, more preferably from 0.1 to 5 weight %, more preferably from 0.5 to 4 weight % in each case based on the total weight of the reactive resin system.

If the reactive resin system contains at least one amine according to any one of the embodiments as disclosed herewith, it is contained in an amount of from 0.001 to 10 weight %, preferably from 0.05 to 8 weight %, more preferably from 0.1 to 2 weight %, more preferably from 0.2 to 1.5 weight % in each case based on the total weight of the reactive resin system.

If the reactive resin system contains at least one alkaline filler according to any one of the embodiments as disclosed herewith, it is contained in an amount of from 0.001 to 20 weight %, preferably from 0.1 to 15 weight %, more preferably from 1 to 10 weight %, more preferably from 2 to 8 weight % in each case based on the total weight of the reactive resin system.

The reactive resin system comprises at least one radically polymerizable compound as reactive resin.

Compounds based on urethane(meth)acrylate-based compounds, compounds based on epoxy(meth)acrylate compounds, methacrylates of alkoxylated bisphenols, compounds based on further ethylenically unsaturated compounds and combinations thereof are suitable as radically polymerizable compounds for the reactive resin, as is known to a person skilled in the art.

Particularly suitable and preferred vinyl ester resins are (meth)acrylate-functionalized resins, which are obtained, for example, by reacting di- and/or higher-functional isocyanates with suitable acrylic compounds, in some cases with the help of hydroxy compounds that contain at least two hydroxyl groups, as described for example in DE 3940309 A1. Very particularly suitable and preferred are the urethane methacrylate resins (which are also referred to as vinyl ester urethane resins) described in DE 102011017 626 B4.

Aliphatic (cyclic or linear) and/or aromatic di- or higher-functional isocyanates or prepolymers thereof can be used as isocyanates. The use of such compounds increases wettability and thus improves the adhesive properties. Aromatic di- or higher-functional isocyanates or prepolymers thereof are preferred, with aromatic di- or higher-functional prepolymers being particularly preferred. Toluylene diisocyanate (TDI), diisocyanatodiphenylmethane (MDI) and polymeric diisocyanatodiphenylmethane (pMDI) for increasing chain stiffening, and hexane diisocyanate (HDI) and isophorone diisocyanate (IPDI), which improve flexibility, may be mentioned by way of example, of which polymeric diisocyanatodiphenylmethane (pMDI) is very particularly preferred.

Suitable acrylic compounds are acrylic acid and acrylic acids substituted on the hydrocarbon group, such as methacrylic acid, hydroxyl-group-containing esters of acrylic or methacrylic acid with polyhydric alcohols, pentaerythritol tri(meth)acrylate, glycerol di(meth)acrylate, such as trimethylolpropane di(meth)acrylate and neopentyl glycol mono(meth)acrylate. Acrylic or methacrylic acid hydroxyalkyl esters, such as hydroxyethyl(meth)acrylate, hydroxypropyl(meth)acrylate, polyoxyethylene(meth)acrylate, polyoxypropylene(meth)-acrylate. Particular preference is given here to the corresponding methacrylates, because the steric hindrance of acrylates leads to improved alkali stability.

Also suitable are compounds which are based at least in part on a recycled compound, in particular of (meth)acrylic esters. Particular preference is given to a (meth) acrylic ester which is obtained from recycled methyl(meth)acrylate. Suitable compounds include hydroxyl-group-containing esters of acrylic or methacrylic acid with polyhydric alcohols, pentaerythritol tri(meth)acrylate, glycerol di(meth)acrylate, such as trimethylolpropane di(meth)acrylate, and neopentyl glycol mono(meth)acrylate, preferably acrylic or methacrylic acid hydroxyalkyl esters, such as hydroxyethyl(meth)acrylate, hydroxypropyl(meth)acrylate, polyoxyethylene(meth)acrylate and polyoxypropylene(meth)acrylate, each of which can be obtained from recycled methyl(meth)acrylate.

Hydroxy compounds that can optionally be used are suitable dihydric or higher alcohols, for example secondary products of ethylene oxide or propylene oxide, such as ethanediol, di- or triethylene glycol, propanediol, dipropylene glycol, other diols, such as 1,4-butanediol, 1,6-hexanediol, neopentyl glycol, diethanolamine, further bisphenol A or F or their ethoxylation/propoxylation and/or hydrogenation or halogenation products, higher alcohols, such as glycerol, trimethylolpropane, hexanetriol and pentaerythritol, hydroxyl-group-containing polyethers, for example oligomers of aliphatic or aromatic oxiranes and/or higher cyclic ethers, such as ethylene oxide, propylene oxide, styrene oxide and furan, polyethers which contain aromatic structural units in the main chain, such as those of bisphenol A or F, hydroxyl-group-containing polyesters based on the above-mentioned alcohols or polyethers and dicarboxylic acids or their anhydrides, such as adipic acid, phthalic acid, tetra- or hexahydrophthalic acid, HET acid, maleic acid, fumaric acid, itaconic acid, sebacic acid and the like. Particularly preferred are hydroxy compounds having aromatic structural units to reinforce the chain of the resin, hydroxy compounds containing unsaturated structural units, such as fumaric acid, to increase the crosslinking density, branched or star-shaped hydroxy compounds, in particular trihydric or higher valence alcohols and/or polyethers or polyesters containing the structural units thereof, branched or star-shaped urethane (meth)acrylates to achieve lower viscosity of the resins or the solutions thereof in reactive diluents and higher reactivity and crosslinking density.

The vinyl ester resin preferably has a molecular weight Mn in the range from 500 to 3,000 daltons, more preferably 500 to 1,500 daltons (according to ISO 13885-1). The vinyl ester resin has an acid value in the range of 0 to 50 mg KOH/g resin, preferably in the range of 0 to 30 mg KOH/g resin (according to ISO 2114-2000).

Preferred vinyl ester resins are (meth)acrylate-functionalized resins and resins which are obtained by reacting an epoxy oligomer or epoxy polymer with methacrylic acid or methacrylamide, preferably with methacrylic acid, and in some cases with a chain extender, such as diethylene glycol or dipropylene glycol. Examples of compounds of this kind are known from the applications US 3297745 A, US 3772404 A, US 4618658 A, GB 2217722 A1, DE 3744390 A1 and DE 4131457 A1.

The epoxy(meth)acrylate resins are obtained by reacting an organic compound having epoxide groups with acrylic acid or methacrylic acid, so that the resins necessarily have acryloxy groups or methyloxy groups at the molecular ends and hydroxyl groups in the 2 position for the formed acryloxy or methacryloxy group (also referred to below as α hydroxyl groups) in the main chain of the molecule. It is expedient to use 0.7 to 1.2 carboxyl equivalents of (meth)acrylic acid per epoxide equivalent. The organic compounds comprising epoxide groups and the (meth)acrylic acid are preferably used in approximately stoichiometric ratios, i.e., an equivalent (meth)acrylic acid is used per epoxide equivalent of the organic compound, for example. The reaction is carried out in the presence of suitable catalysts known to those skilled in the art, such as quaternary ammonium salts.

Advantageously, organic compounds having epoxide groups are used with a molecular weight having a number average molecular weight *M̅ₙ* in the range from 129 to 2,400 g/mol and which include at least one, preferably 1.5 to 2 epoxy groups per molecule in the average. The epoxy groups are particularly preferably of the glycidyl ether or glycidyl ester type obtained by reacting an epihalohydrin, in particular epichlorohydrin, with a mono- or polyfunctional aliphatic or aromatic hydroxy compounds, thiol compounds or carboxylic acids or a mixture thereof. The organic compound comprising obtained epoxide groups has an epoxy equivalent mass (EEW) preferably in the range from 87 to 1600 g/val, more preferably in the range from 160 to 800 g/val and most preferably in the range from 300 to 600 g/val.

Examples of suitable compounds having epoxide groups are polyglycidyl ethers of polyhydric phenols, for example pyrocatechol, resorcinol, hydroquinone, 4,4'-dihydroxydiphenylmethane, 2,2- (4,4'-dihydroxydiphenyl) propane (bisphenol A), bis(4-hydroxyphenyl) methane (bisphenol F), 4,4'-dihydroxydiphenyl sulfone (bisphenol S), 4,4'-dihydroxydiphenyl cyclohexane, tris (4-hydroxyphenyl)-methane, novolacs (i.e., from reaction products of mono- or polyhydric phenols with aldehydes, in particular formaldehyde, in the presence of acidic catalysts), such as phenol novolac resin, cresol novolac resin.

Furthermore, the following can be mentioned as non-limiting examples: Glycidyl ethers of monoalcohols, for example n-butanol or 2-ethylhexanol; or glycidyl ethers of polyhydric alcohols, for example of 1,3-butanediol, 1,4-butanediol, 1,6-hexanediol, glycerol, benzyl alcohol, neopentyl glycol, ethylene glycol, cyclohexanedimethanol, trimethylolpropane, pentaerythritol and polyethylene glycols, triglycidyl isocyanurate; polyglycidyl thioether of polyvalent thiols, such as bismercaptomethylbenzene; or glycidyl esters of monocarboxylic acids, such as versatic acid; or glycidyl esters of polyvalent, aromatic and aliphatic carboxylic acids, for example phthalic acid diglycidyl esters, isophthalic acid diglycidyl esters, terephthalic acid diglycidyl esters, tetrayhydrophthalic acid diglycidyl esters, adipinic acid diglycidyl esters, and hexahydrophthalic acid diglycidyl esters.

Particularly preferred organic compounds comprising epoxide groups are diglycidyl ethers of divalent hydroxy compounds of the general formula (VI) 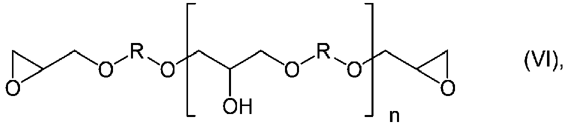 in which R is an unsubstituted or substituted aliphatic or aromatic group, preferably an aromatic group, more preferably an aromatic group having 6 to 24 carbon atoms, and the average value for n is 0 to 3. R is particularly preferably a group of the bisphenol type, such as bisphenol A, bisphenol F or bisphenol S, or of the novolac type, wherein a group of the bisphenol type is very particularly preferred. The average value for n is preferably about 0.1, about 1 or about 2. Within the meaning of the present invention, compounds in which n ~ 0.1 are referred to as monomers, and compounds in which n ~ 1 or 2 are referred to as polymers.

The polymeric compounds have the advantage over the monomeric compounds that the reactive resin content in the reactive resin composition can be significantly reduced, which makes the reactive resin composition more economical in production, because the production costs can thereby be reduced.

Within the meaning of the invention, vinyl ester resins are oligomers or polymers having at least one (meth)acrylate end group, what are referred to as (meth)acrylate-functionalized resins, which also include primarily epoxy(meth)acrylates.

Vinyl ester resins, which have unsaturated groups only in the end position, are obtained, for example, by reacting epoxy oligomers or polymers (for example bisphenol A digylcidyl ether, phenol novolac-type epoxies or epoxy oligomers based on tetrabromobisphenol A) with (meth)acrylic acid or (meth)acrylamide, for example. Preferred vinyl ester resins are (meth)acrylate-functionalized resins and resins which are obtained by reacting epoxy oligomers or epoxy polymers with methacrylic acid or methacrylamide, preferably with methacrylic acid. Examples of compounds of this kind are known from the applications US 3297745 A, US 3772404 A, US 4618658 A, GB 2217722 A1, DE 3744390 A1 and DE 4131457 A1. In this context, reference is made to the application US 2011/071234.

The vinyl ester resin preferably has a molecular weight Mn in the range of 500 to 3,000 daltons, more preferably 500 to 1,500 daltons (according to ISO 13885-1). The vinyl ester resin has an acid value in the range of 0 to 50 mg KOH/g resin, preferably in the range of 0 to 30 mg KOH/g resin (according to ISO 2114-2000).

Ethoxylated bisphenol A di(meth)acrylate having a degree of ethoxylation of 2 to 10, preferably of 2 to 4, difunctional, trifunctional or higher functional urethane (meth)acrylate oligomers, or mixtures of these polymerizable constituents are particularly suitable as the vinyl ester resin.

Examples of epoxy(meth)acrylates of this kind are those of formula (V) 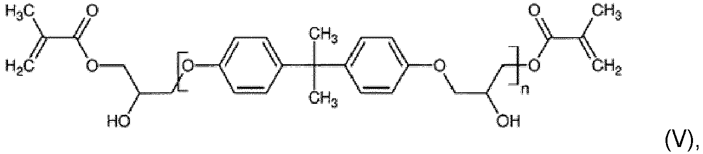 wherein n represents a number greater than or equal to 1 (if mixtures of different molecules are present with different n values and are represented by formula (V), non integers are also possible as an average).

Further examples of the propoxylated or in particular ethoxylated aromatic diol, such as bisphenol A, bisphenol F or novolac (in particular di-)(meth)acrylates, are those of formula (VI) 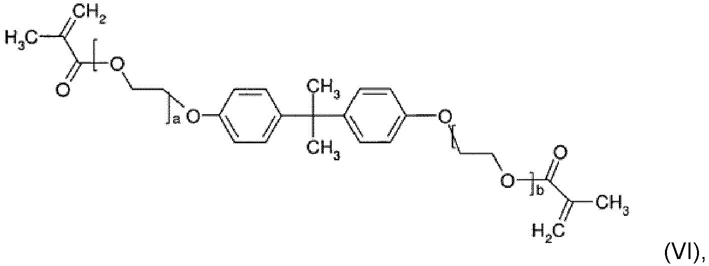 wherein a and b each independently represent a number greater than or equal to 0 with the proviso that preferably at least one of the values is greater than 0, preferably both 1 or greater (if mixtures of different molecules having different (a and b) values are present and are represented by the formula (VI), non-integer numbers are also possible as the average value).

The known reaction products of di- or polyisocyanates and hydroxyalkylmethylacrylates, as described, for example, in DE 2312559 A1, adducts of (di)isocyanates and 2,2-propane bis[3-(4-phenoxy)-1,2-hydroxypropane-1-methacrylate] according to US-PS 3 629 187, and the adducts of isocyanates and methacryloyl alkyl ethers, alkoxybenzenes or alkoxycycloalkanes, as described in EP 44352 A1, are very particularly suitable. In this context, reference is made to DE 2312559 A1, DE 19902685 A1, EP 0684906 A1, DE 4111828 A1 and DE 19961342 A1. Of course, mixtures of suitable monomers can also be used.

All of these resins that can preferably be used according to the invention can be modified according to methods known to a person skilled in the art, for example to achieve lower acid numbers, hydroxide numbers or anhydride numbers, or can be made more flexible by introducing flexible units into the backbone, and the like.

In addition, the reactive resin may contain other reactive groups that can be polymerized with a radical initiator, such as peroxides, for example reactive groups derived from itaconic acid, citraconic acid and allylic groups and the like, as described, for example, in WO 2010/108939 A1 (itaconic acid ester).

The reactive resin system can contain suitable reactive diluents, as are described in the applications EP 1 935 860 A1 and DE 195 31 649 A1. Preferably, the reactive resin composition contains, as the reactive diluents, a (meth)acrylic acid ester, particularly preferably aliphatic or aromatic C₅-C₁₅-(meth)acrylates being selected. Suitable examples comprise: 2-, 3-hydroxypropyl(meth)acrylate (HP(M)A), 1,3-propanediol di(meth)acrylate, 1,3-butanediol di(meth)acrylate, 1,4-butanediol di(meth)acrylate, trimethylolpropane tri(meth)acrylate, phenethyl (meth)acrylate, tetrahydrofurfuryl (meth)acrylate, *N*,*N*-dimethylaminoethyl (meth)acrylate, *N*,*N*-dimethylaminomethyl (meth)acrylate, acetoacetoxyethyl (meth)acrylate, isobornyl (meth)acrylate, 2-ethylhexyl (meth)acrylate, methoxypolyethylene glycol mono(meth)acrylate, trimethylcyclohexyl (meth)acrylate, 2-hydroxyethyl (meth)acrylate, dicyclopentenyloxyethyl (meth)acrylate and/or tricyclopentadienyl di(meth)acrylate, bisphenol A (meth)acrylate, novolac epoxy di(meth)acrylate, di-[(meth)acryloyl-maleoyl]-tricyclo-5.2.1.0.^{2.6}-decane, dicyclopentenyloxyethylcrotonate, 3-(meth)acryloyl-oxymethyl-tricylo-5.2.1,0.^{2.6}-decane, 3-(meth)cyclopentadienyl (meth)acrylate, and decalyl-2-(meth)acrylate; glycerol formal(meth)acrylate; solketal (meth)acrylate, cyclohexyl (meth)acrylate, phenoxyethyl di(meth)acrylate, methoxyethyl (meth)acrylate, *tert*-butyl (meth)acrylate and norbornyl (meth)acrylate. Methacrylates are preferred over acrylates. Particularly preferred are 2- and 3-hydroxypropyl methacrylate (HPMA), 1,2-ethanediol dimethacrylate, 1,4-butanediol dimethacrylate (BDDMA), 1,3-butanediol dimethacrylate, trimethylolpropane trimethacrylate, acetoacetoxyethyl methacrylate, isobornyl methacrylate, bisphenol A methacrylate, trimethylcyclohexyl methacrylate, 2-hydroxyethyl methacrylate, PEG200 or PEG400 dimethacrylate and norbornyl methacrylate. 1,4-Butanediol dimethacrylate and a mixture of 2- and 3-hydroxypropyl methacrylate (HPMA), or a mixture of these three methacrylates, are very particularly preferred. A mixture of 2- and 3-hydroxypropyl methacrylate (HPMA) is most preferred. In principle, other conventional radically polymerizable compounds, alone or in a mixture with the (meth)acrylic acid esters, can also be used as reactive diluents, e.g., styrene, α-methylstyrene, alkylated styrenes, such as tert-butylstyrene, divinylbenzene and vinyl and allyl compounds, of which the representatives that are not subject to mandatory labeling are preferred. Examples of vinyl or allyl compounds of this kind are hydroxybutyl vinyl ether, ethylene glycol divinyl ether, 1,4-butanediol divinyl ether, trimethylolpropane divinyl ether, trimethylolpropane trivinyl ether, mono-, di-, tri-, tetra- and polyalkylene glycol vinyl ether, mono-, di-, tri-, tetra- and polyalkylene glycol allyl ether, adipic acid divinyl ester, trimethylolpropane diallyl ether and trimethylolpropane triallyl ether.

The reactive diluents are preferably present in the reactive resin in an amount to approx. 80 weight %, particularly preferably from approx. 10 to approx. 60 weight %, even more preferably from approx. 30 to approx. 60 weight %, based on the reactive resin.

One or more inhibitors can be present in the reactive resin system according to the invention, both for stabilizing the reactive resin or the reactive resin composition containing the reactive resin, and for adjusting the resin reactivity.

The inhibitors usually used for radically polymerizable compounds, as are known to a person skilled in the art, are suitable for this purpose. These inhibitors are preferably selected from non-phenolic inhibitors, in particular phenothiazines.

Phenothiazines such as phenothiazine and/or derivatives or combinations thereof, or stable organic radicals such as galvinoxyl and *N*-oxyl radicals, in particular of the piperidinyl-*N*-oxyl or tetrahydropyrrole-*N*-oxyl type, are preferably considered as non-phenolic inhibitors, such as aluminum-*N*-nitrosophenylhydroxylamine, diethylhydroxylamine, oximes such as acetaldoxime, acetone oxime, methyl ethyl ketoxime, salicyloxime, benzoxime, glyoximes, dimethylglyoxime, acetone-O-(benzyloxycarbonyl)oxime, 4-hydroxy-TEMPO, (TEMPOL), 4-acetyl-TEMPO, TEMPO and the like.

Furthermore, pyrimidinol or pyridinol compounds substituted in para-position to the hydroxyl group, as described in DE 10 2011 077 248 B1, can be used as inhibitors.

Examples of stable *N*-oxyl radicals which can be used are those described in DE 199 56 509 A1 and DE 195 31 649 A1. Stable nitroxyl radicals of this kind are of the piperidinyl-*N*-oxyl or tetrahydropyrrole-*N*-oxyl type or a mixture thereof.

Preferred stable nitroxyl radicals are selected from the group consisting of 1-oxyl-2,2,6,6-tetramethylpiperidine, 1-oxyl-2,2,6,6-tetramethylpiperidin-4-ol (also referred to as TEMPOL), 1-oxyl-2,2,6,6-tetramethylpiperidin-4-one (also referred to as TEMPON), 1-oxyl-2,2,6,6-tetramethyl-4-carboxyl-piperidine (also referred to as 4-carboxy-TEMPO), 1-oxyl-2,2,5,5-tetramethylpyrrolidine, 1-oxyl-2,2,5,5-tetramethyl-3-carboxylpyrrolidine (also referred to as 3-carboxy-PROXYL) and mixtures of two or more of these compounds, with 1-oxyl-2,2,6,6-tetramethylpiperidin-4-ol (TEMPOL) being particularly preferred.

The inhibitor or inhibitors are preferably selected from the group consisting of *N*-oxyl radicals, catechols, catechol derivatives and phenothiazines and a mixture of two or more thereof. The inhibitor or inhibitors selected from the group consisting of Tempo!, catechols and phenothiazines are particularly preferred. The inhibitors used in the examples are very particularly preferred, preferably approximately in the amounts stated in the examples.

The inhibitors can be used either alone or as a combination of two or more thereof, depending on the desired properties of the reactive resin. The combination of phenolic and non-phenolic inhibitors is preferred.

The inhibitor or inhibitor mixture is added - or is already contained in the raw materials used - in conventional amounts known in the art, preferably in an amount of approximately 0.0005 to approximately 2 weight %, more preferably from approximately 0.001 to approximately 1 weight %, even more preferably from approximately 0.005 to approximately 0.5 weight % based on the reactive resin.

Furthermore, the reactive resin system may contain customary fillers and/or additives for chemical fastening. It should be noted that some substances can be used both as a filler and, optionally in modified form, as an additive. For example, fumed silica is preferably used as a filler in its polar, non-after-treated form, and is preferably used as an additive in its non-polar, after-treated form. In cases in which exactly the same substance can be used as a filler or an additive, its total amount should not exceed the upper limit for fillers that is determined herein.

To formulate the reactive resin system according to the invention, conventional fillers may be used, preferably mineral or mineral-like fillers, such as quartz, glass, sand, quartz sand, quartz powder, porcelain, corundum, ceramics, talc, silica (e.g., fumed silica, in particular polar, non-after-treated fumed silica), silicates, aluminum oxides (e.g., alumina), clay, titanium dioxide, chalk, barite, feldspar, basalt, aluminum hydroxide, granite or sandstone, polymeric fillers such as thermosets, hydraulically curable fillers such as gypsum, quicklime or cement (e.g., aluminate cement (often referred to as alumina cement) or Portland cement), metals such as aluminum, carbon black, and also wood, mineral or organic fibers, or the like, or mixtures of two or more thereof. The fillers may be present in any desired shapes, for example as powder, or as shaped bodies, e.g., having a cylindrical, annular, spherical, platelet, rod, saddle or crystal shapes, or else shaped like fiber (fibrillar fillers), and the corresponding base particles preferably have a maximum diameter of approximately 10 mm and a minimum diameter of approximately 1 nm. This means that the diameter is approximately 10 mm or any value less than approximately 10 mm, but more than approximately 1 nm. The maximum diameter is preferably a diameter of approximately 5 mm, more preferably approximately 3 mm, even more preferably approximately 0.7 mm. A maximum diameter of approximately 0.5 mm is very particularly preferred. The more preferred minimum diameter is approximately 10 nm, even more preferably approximately 50 nm, very particularly preferably approximately 100 nm. Diameter ranges resulting from a combination of this maximum diameter and minimum diameter are particularly preferred. However, the globular, inert substances (spherical shape) have a preferred and more pronounced reinforcing effect. Core-shell particles, preferably having a spherical shape, can also be used as fillers.

Preferred fillers are selected from the group consisting of cement, silica, quartz, quartz sand, quartz powder, and mixtures of two or more thereof. For the purpose of chemical fastening, fillers selected from the group consisting of cement, fumed silica, in particular untreated, polar fumed silica, quartz sand, quartz powder, and mixtures of two or more thereof are particularly preferred.

Also suitable is the use of at least one powdered recycling material according to the previously unpublished European patent application EP 21 207137.7 (filing date 11/09/2021) as a filler.

Further possible additives are also rheology additives, such as optionally organically or inorganically after-treated fumed silica (if not already used as a filler), in particular fumed silica after-treated in a non-polar manner, bentonites, alkyl- and methylcelluloses, castor oil derivatives or the like, plasticizers, such as phthalic or sebacic acid esters, stabilizers, antistatic agents, thickening agents, flexibilizers, hardening catalysts, rheological aids, wetting agents, coloring additives, such as dyes or in particular pigments, for example for different staining of the components for improved control of the mixing thereof, or the like, or mixtures of two or more thereof. Agents for regulating pH, such as inorganic and/or organic acids according to DE 102010008971 A1, in particular copolymers having acidic groups, e.g., esters of phosphoric acid, can also be used. Non-reactive diluents (solvents) such as lower-alkyl ketones, e.g., acetone, di-lower-alkyl lower-alkanoyl amides such as dimethylacetamide, lower-alkylbenzenes such as xylenes or toluene, phthalic acid esters or paraffins, or water, or glycols can also be present, preferably in an amount of up to 30 weight %, based on the relevant component (reactive resin mortar, hardener), for example from 1 to 20 weight %. Furthermore, agents for improving the compatibility between the resin component and the hardener component can also be used, such as ionic, nonionic or amphoteric surfactants; soaps, wetting agents, detergents; polyalkylene glycol ethers; salts of fatty acids, mono- or diglycerides of fatty acids, sugar glycerides, lecithin; alkane sulfonates, alkylbenzene sulfonates, fatty alcohol sulfates, fatty alcohol polyglycol ethers, fatty alcohol ether sulfates, sulfonated fatty acid methyl esters; fatty alcohol carboxylates; alkyl polyglycosides, sorbitan esters, N-methyl glucamides, sucrose esters; alkyl phenols, alkyl phenol polyglycol ethers, alkyl phenol carboxylates; quaternary ammonium compounds, esterquats, carboxylates of quaternary ammonium compounds.

In one embodiment, the reactive resin system may additionally contain an adhesion promoter. By using an adhesion promoter, the crosslinking of the borehole wall with the dowel compound is improved such that the adhesion increases in the cured state. This is important for the use of a dowel compound, e.g., in boreholes drilled with a diamond drill, and increases the failure bond stress. Suitable adhesion promoters are selected from the group of silanes which are functionalized with further reactive organic groups and can be incorporated into the polymer network. This group comprises, for example, 3-(meth)acryloyloxypropyltrimethoxysilane, 3-(meth)acryloyloxypropyltriethoxysilane, 3-(meth)acryloyloxymethyltrimethoxysilane, 3-(meth)acryloyloxymethyltriethoxysilane, vinyltrimethoxysilane, vinyltriethoxysilane, functionalized tetraethoxysilane, functionalized tetramethoxysilane, functionalized tetrapropoxysilane, functionalized ethyl or propyl polysilicate, and mixtures of two or more thereof. In this respect, reference is made to the application DE 10 2009 059210.

In a particularly preferred embodiment, the constituents of the reactive resin system are one or more of the constituents which are mentioned in the examples according to the invention. Reactive resins or reactive resin an/or hardener compositions which contain the same constituents or consist of the same constituents as are mentioned in the individual examples according to the invention, preferably approximately in the proportions stated in said examples, are very particularly preferred.

The invention is explained in greater detail in the following with reference to a number of examples. All examples and drawings support the scope of the claims. However, the invention is not limited to the specific embodiments shown in the examples and drawings.

### EXAMPLES

Unless stated otherwise, all constituents of the compositions that are listed here are commercially available and were used in the usual commercial quality.

**Table 1: Names of components and their description**

| **Name or abbreviation** | **Description** |
|---|---|
| UMA121 | urethane methacrylate resin according to WO2019/007667, example C1: |
| | the resin was prepared and further used as a master batch in mixing with BDDMA in a mass ratio of 65/35 |
| 1,4-BDDMA | 1,4-butanediol dimethacrylate; trade name: Visiomer^{®} 1,4-BDDMA (Evonik) |
| HPMA | 2- hydroxypropyl methacrylate, (GEO) |
| Octa-Soligen^{®} Manganese 8 (oil) | manganese drier in solvent-based systems (OMG, Borchers) |
| Octa-Soligen^{®} Manganese 10HS | manganese drier in VOC-reduced and high-solid coating (OMG, Borchers) |
| Copper(II) hexanoate | copper(2)dihexanoate, (Sigma-Aldrich) |
| Copper(ll) acetylacetonate | copper(2)acetylacetonate, (Sigma-Aldrich) |
| CAB-O-SIL^{®} TS-720 | hydrophobized fumed silica (Cabot) |
| CEM I | portland Cement CEM/I 32,5 R EN 197-1 (Cemco) |
| Rock flour | drill dust from C20/25 concrete |
| ABL | 2-Acetylbutyrolactone, Sigma-Aldrich |
| diABL | 1,4-bis(tetrahydro-2-oxo-3-furanyl)-butan-1,4-dion; (Sohena) |
| DIPPT | bis(hydroxypropanol)-p-toluidine, BASF |
| PEG200DMA | polyethylene glycol (200) dimethacrylate; Trade name: Visiomer PEG200DMA (Evonik) |
| MEMO | 3-methacryloxypropyl trimethoxysilane; Dynasylan^{®} MEMO (Evonik) |
| Diethyl adipate | diethyl adipate (TCI Europe) |
| DINCH^{®} | hexamoll^{®} DINCH (BASF) |
| SR348C | ethoxylated 3 bisphenol A dimethacrylate (Arkema) |
| GDMA | glycerol dimethacrylate; VISIOMER^{®} GDMA (Evonik) |
| ECOCRYL^{®} 05345 | epoxy methacrylate resin based on bisphenol A diglycidylether and diluted with a difunctional monomer; (Westlake Epoxy) |
| Octa-Soligen^{®} Iron 7/8 | iron salt solution (OMG, Borchers) |
| TIB KAT^{®} 808 | copper naphtenate solution (TIB Chemicals), CAS# 1338-02-9 |
| Saccharin | 2-sulfobenzoic acid imide (SigmaAldrich) |
| Quartz sand F32 | quartz sand (Quarzwerke Frechen) |
| Millisil^{®} W12 | quartz flour (Quarzwerke Frechen) |
| Dyckerhoff white 42.5 | White Portland cement (Dyckerhoff) |
| TERNAL@ White | calcium aluminate cement (Imerys SA) |
| BYK-P 105 | low molecular weight unsaturated polycarboxylic acid polymer (BYK- Chemie GmbH) |
| Triethyl citrate | triethyl citrate (Thermo-Fisher) |

### Preparation of resins in Tables 2 and 3

Base resins (urethane methacrylate, epoxy methacrylate or ethoxylated bisphenol dimethacrylate) were mixed with reactive diluents and stirred at a magnetic stirrer at 50°C until homogenization. The metal salt was added during the process in solid or as a solution. For curing, first saccharin was added and stirred in by hand, followed by the addition and stirring in of ABL or diABL. Curing was observed in a gel timer (GELNORMO) at 25°C.

### Preparation of the chemical anchors in Tables 4, 5 and 6

For preparation of two-component injection mortars, the resin component (A) is made using a resin mixture as described above and dissolution of the corresponding metal salt. After the additives and fillers were added, the mortar was finished using a dissolver (PC Laborsystem) for 8 min w/ 3500 rpm mixing at 100 mBar vacuum.

The hardener component (B) was prepared by first combing the liquid ingredients, followed by the addition of fillers and additives. Mixing was performed in the dissolver (PC Laborsystem) for 8 min w/ 3500 rpm mixing at 100 mBar vacuum.

To prepare the mortar compositions, the resin component (A) and the hardener component (B) were each filled into hard cartridges in the specified volume ratio and applied via a static mixer (HIT-RE-M, Hilti) into the borehole.

### Measurement of gel time

The gel time of the mixture obtained in this way from the reactive resin (A) and the hardener component (B) was determined using a commercially available device (GELNORM^{®} Gel Timer) at a temperature of 25°C. For this purpose, the resin component (A) and the hardener component (B) were mixed in the specified volume ratio, and the temperature of the sample was measured immediately after mixing. In the same manner, the gel time was also measured for the unfilled resins of Tables 2 and 3, immediately after all the components were homogenized/mixed. The sample itself is located in a test tube which is arranged with an air jacket in a silicone bath heated to 25°C. Tests were run following DIN 16945:1989-03.

### Determination of load values

To determine the load values of the cured composition, a high-strength anchor threaded rod M12, which was introduced into a borehole with a diameter of 14 mm and a borehole depth of 72 mm in C20/25 concrete after cleaning with compressed air (blown twice with 6 Bar) and fitting steel brush (brushed twice), as well as a repeated blowing out (twice 6 Bar) with the respective chemical mortar composition at about 20°C, were used. The tests were run according to ETAG 001 Part 5.

The average failure load (R1) is determined by centrally pulling out the anchor threaded rod with close support. Five anchor threaded rods were each doweled and the load values were determined after a hardening time of 24 hours at room temperature. The mean load values determined in this case (average of the five measurements) are listed in Table 6 (below).

The determination of the failure load in the moist concrete (B7) was carried out analogously, wherein the boreholes were produced in the concrete stored for 4 weeks under water. The concrete block was only briefly removed from the water for the experiment. Cleaning took place here after drilling by one-time blowing out, brushing with the steel brush and in turn blowing out with compressed air at 6 bar.

Similar to pull-out-tests in concrete, 'steel-to-steel' test was used. The anchor rods were fastened by injection mortars in an internal threaded sleeve (HILTI HIS-N). The anchor was pulled out after curing by Zwick^{®} tensile testing machine. The load level is independent from concrete quality and drilling conditions.

**Table 2: Curing of resins (unfilled)**

| **Components in grams** | **Comparative Example 1** | **Comparative Example 2** | **Comparative Example 3** | **Example 1** | **Example 2** | **Example 3** |
|---|---|---|---|---|---|---|
| UMA121 | 3 | 3 | 3 | 3 | 3 | 3 |
| 1,4-BDDMA | 3 | 3 | 3 | 3 | 3 | 3 |
| HPMA | 1.5 | 1.5 | 1.5 | 1.5 | 1.5 | 1.5 |
| Saccharin | | | | 0.05 | 0.05 | 0.05 |
| Octa-Soligen^{®} Manganese 10HS | 0.075 | | | 0.075 | | |
| Octa-Soligen^{®} Iron 7/8 | | 0.075 | | | 0.075 | |
| TIB KAT^{®} 808 (Copper) | | | 0.075 | | | 0.075 |
| ABL | 0.25 | 0.25 | 0.25 | 0.25 | 0.25 | 0.25 |
| | | | | | | |
| Gel time at 25 °C (min) | 25 | No gelling | No gelling | 3 | 8 | 19 |

| | | | | | | |
|---|---|---|---|---|---|---|
| Comparative Example 1, representing prior art, shows that ABL works as a hardener with manganese and without saccharin. However, the gel time for Comparative Example 1 is relatively long. Comparative Examples 2 and 3 show that iron or copper together with ABL do not initiate polymerization. On the other hand, in the presence of saccharin as seen in Examples 2 and 3, curing is accelerated significantly showing fast gel times. | | | | | | |

**Table 3: Curing of resins (comprising further accelerators)**

| **Components in grams** | **Example 4** | **Example 5** | **Example 6** | **Example 7** | **Example 8** | **Example 9** | **Example 10** | **Example 11** |
|---|---|---|---|---|---|---|---|---|
| UMA121 | 3 | 3 | 3 | 3 | 3 | 3 | 3 | 3 |
| 1,4-BDDMA | 3 | 3 | 3 | 3 | 3 | 3 | 3 | 3 |
| HPMA | 1.5 | 1.5 | 1.5 | 1.5 | 1.5 | 1.5 | 1.5 | 1.5 |
| Saccharin | 0.05 | 0.05 | 0.05 | 0.05 | 0.05 | 0.05 | 0.05 | 0.05 |
| DIPPT | | | 0.05 | | | | 0.05 | |
| CEM I | | | | 0.5 | | | 0.5 | |
| Ternal^{®} White | | | | | 0.5 | | | |
| Rock flour | | | | | | 0.5 | | |
| TIB KAT^{®} 808 | | | 0.075 | 0.075 | 0.075 | 0.075 | 0.075 | 0.075 |
| Octa-Soligen^{®} Copper 8 | 0.075 | | | | | | | |
| Copper(ll) acetylacetonate | | 0.05 | | | | | | |
| ABL | 0.25 | 0.25 | 0.25 | 0.25 | 0.25 | 0.25 | 0.25 | |
| diABL | | | | | | | | 0.25 |
| | | | | | | | | |
| Gel time at 25 °C (min) | 25 | 17 | 10 | 12 | 6 | 11 | 5 | 50 |

| | | | | | | | | |
|---|---|---|---|---|---|---|---|---|
| Examples 4 and 5 show that other sources of copper together with saccharin and ABL also provide good gel times. Examples 6-10 show that addition of further accelerators such as tertiary aromatic amines (Examples 6 and 10) and alkaline fillers such as cement and concrete dust (Examples 7-10) further accelerate curing. Resin of Example 11, comprising diABL together with saccharin and copper, also cures at 25 °C. | | | | | | | | |

**Table 4: Chemical anchors (filled 2-component mortars)**

| **Resin component (A)** | **Comparative Example 4** | **Example 12** | **Example 13** |
|---|---|---|---|
| UMA121/1,4-BDDMA 65:35 | 24 | 24 | 24 |
| 1,4-BDDMA | 16 | 16 | 16 |
| TIB KAT^{®} 808 | 0.4 | 0.4 | 0.4 |
| CAB-O-SIL^{®} TS-720 | 2.5 | 2.5 | 2.5 |
| Millisil^{®} W12 | 20 | 20 | 15 |
| Quartz sand F32 | 37.1 | 37.1 | 37.1 |
| TERNAL@ White | | | 5 |
| Total weight-% | 100 | 100 | 100 |
| **Hardener component (B)** | | | |
| ABL | 10 | 10 | 10 |
| Diethyl adipate | 35 | 35 | 35 |
| Saccharin | | 4 | 4 |
| Millisil^{®} W12 | 49 | 45 | 45 |
| CAB-O-SIL^{®} TS-720 | 6 | 6 | 6 |
| Total weight-% | 100 | 100 | 100 |
| | | | |
| Mixing ratio A:B [Vol/Vol] | 5:1 | 5:1 | 5:1 |
| | | | |
| Gel time at 25 °C (min) | No gelling | 33 | 10.8 |
| Gel time at 5 °C (min) | No gelling | No gelling | 130 |
| | | | |
| R1 [N/mm²] 'ultimate bonds strength' | --- | 7.9 | 7.7 |

| | | | |
|---|---|---|---|
| Comparative Example 4, comprising copper and ABL and no saccharin, displays no curing. Addition of saccharin provides working mortars with good gel times and load values (Examples 12 and 13). Improved gel time at 25 °C and curing at low temperature of 5 °C can also be achieved by further including cement (Example 13). | | | |

**Table 5: Chemical anchors (filled 2-component mortars)**

| **Resin component (A)** | **Example 14** | **Example 15** | **Example 16** | **Example 17** |
|---|---|---|---|---|
| UMA121/1,4-BDDMA | 21 | 21 | | |
| SR348C | | | 25 | |
| ECOCRYL^{®} 05345 | | | | 21 |
| 1,4-BDDMA | | 7 | | 14 |
| PEG200DMA | 11 | | 7 | |
| GDMA | | 6.5 | | |
| MEMO | 3 | | 3 | |
| DIPPT | | | | 0.3 |
| TIB KAT^{®} 808 | 0.4 | 0.4 | 0.4 | 0.4 |
| BYK P105 | | 0.5 | | |
| CAB-O-SIL^{®} TS-720 | 2 | 2 | 2 | 2 |
| Millisil^{®} W12 | 15 | 15 | 15 | 15 |
| Quartz sand F32 | 42.6 | 42.6 | 42.6 | 42.3 |
| TERNAL^{®} White | 5 | | | 5 |
| Dyckerhoff white 42.5 | | | 5 | |
| Rock flour | | 5 | | |
| Total weight-% | 100 | 100 | 100 | 100 |
| | | | | |
| **Hardener component (B)** | | | | |
| ABL | 10 | 10 | 10 | 15 |
| Diethyl adipate | 35 | | 35 | |
| DINCH | | 35 | | |
| Triethyl citrate | | | | 30 |
| | | | | |
| Saccharin | 4 | 4 | 4 | 4 |
| | | | | |
| Millisil^{®} W12 | 45 | 46 | 45 | 26 |
| TERNAL^{®} White | | | | 20 |
| | | | | |
| CAB-O-SIL^{®} TS-720 | 6 | 5 | 6 | 5 |
| Total weight-% | 100 | 100 | 100 | 100 |
| | | | | |
| Mixing ratio A : B (Vol/Vol) | 5 : 1 | 10 : 1 | 5 : 1 | 5 : 1 |
| Gel time at 25 °C (min) | 12.8 | 6.3 | 2 | 25 |
| Steel-to-Steel [N/mm²] | 21.5 | 33.5 | 27.1 | 25.5 |

**Table 6: Chemical anchors**

| The "resin mixture" described in Table 6 consists of 33.4% UMA121 (base resin), 33.3% 1,4-butanediol dimethacrylate (1,4-BDDMA) and 33.4% 2-hydroxypropyl methacrylate (HPMA). | | | | | |
|---|---|---|---|---|---|
| | **Comparative Example 5** | **Comparative Example 6** | **Comparative Example 7** | **Example 18** | **Example 19** |
| **Resin component (A)** | | | | | |
| Resin mixture | 40 | 40 | 40 | 40 | 40 |
| Octa-Soligen^{®} Manganese 10HS | 0.4 | | | | |
| Copper(II) hexanoate | | 0.08 | 0.08 | 0.08 | 0.08 |
| CAB-O-SIL^{®} TS-720 | 3 | 3 | 3 | 3 | 3 |
| CEM I | | | 5 | | 5 |
| Quartz sand F32 | 35.6 | 35.92 | 35.92 | 35.92 | 35.92 |
| Millisil^{®} W12 | 21 | 21 | 16 | 21 | 16 |
| Total weight-% | 100 | 100 | 100 | 100 | 100 |

| **Hardener component (B)** | | | | | |
|---|---|---|---|---|---|
| Diethyl adipate | 32 | 30 | 30 | 30 | 30 |
| ABL | 8.5 | 16 | 16 | 16 | 16 |
| Saccharin | | | | 6 | 6 |
| Cab-O-Sil^{®} TS-720 | 5.6 | 5.6 | 5.6 | 5.6 | 5.6 |
| Millisil^{®} W12 | 53.9 | 48.4 | 48.4 | 42.4 | 42.4 |
| Total weight-% | 100 | 100 | 100 | 100 | 100 |
| Gel time at 25 °C (min) | 1.5 | >240 | >240 | 5.2 | 1.5 |
| Gel time at 0 °C (min) | not determined | No gelling | No gelling | 70 | 25 |
| Mixing ratio A : B (Vol/Vol) | 10 : 1 | 10 : 1 | 10 : 1 | 10 : 1 | 10 : 1 |
| The average failure load (R1) in concreate C20/25 [N/mm²] | 12.4 | --- | --- | 11.5 | 6.6 |

Example 18 and Example 19 show fast gel times and curing at low temperatures. Even with the addition of cement composition comprising copper/ABL initiator (i.e. Comparative Example 7) shows very slow gel time at 25 °C and no gelling at 0 °C. Example 18 shows that with the addition of saccharin crosslinking is achieved. Example 19 shows that the combination of saccharin and cement gives a further acceleration in crosslinking displaying even faster gel time of 1.5 min. Therefore, curing at low temperatures while having high pull-out strengths provides advantageous mortar compositions for the use as chemical anchors.

## Claims

1. A **hardener system** for a reactive resin system which contains radically polymerizable compounds, wherein the hardener system comprises
a) at least one compound of Formula (I) 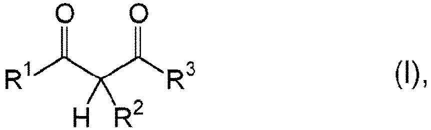
wherein R¹ is unbranched or branched, preferably substituted, C₁-C₄-alkyl group or C₁-C₄-alkoxy group,
wherein R³ is unbranched or branched, preferably substituted, C₁-C₄-alkyl group, C₁-C₄-alkoxy group or 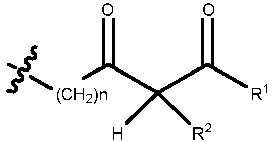
wherein n=1, 2, 3, or 4,
R² is an unbranched or branched, optionally substituted C₁-C₄-alkyl group or C₁-C₄-alkoxy group, or R² together with R₁ or R₃ forms an optionally substituted five- or six-membered aliphatic ring, which optionally comprises at least one heteroatom in or on the ring;
b) at least one compound of Formula (III) 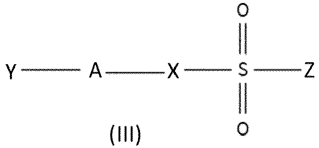
wherein independently from each other Y is an aromatic ring, optionally substituted at up to five positions by at least one C1-C6 alkyl group, or at least one alkoxy group, or at least one halo group, or combinations of two or more thereof,
X is NH, NF, NCI, NBr, Nl, N-formyl, N-methacryl, or N⁻(cation),
wherein cation is selected from the cation of lithium, sodium, potassium, calcium, or combinations of two or more thereof,
A is C=O, S=O or O=S=O, and
Z is an aromatic ring, optionally substituted at up to five positions by at least one C1-C6 alkyl group, or at least one alkoxy group, or at least one halo group, or combinations of two or more thereof; or wherein Y and Z are joined together in the same aromatic ring or ring structure; and
c) at least one transition metal in the form of a salt, a compound, a complex or a mixture of two or more thereof.

2. The hardener system according to claim 1, wherein the compound of Formula (I) is a compound of Formula (II) 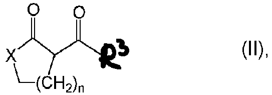 in which independently
X = C, O,
n = 1, 2 and
R³ is a straight-chain or branched, optionally substituted C₁-C₄-alkyl group or a C₁-C₄-alkoxy group.

3. The hardener system according to claim 1 or 2, wherein the compound of Formula (II) is selected from the group consisting of α-acetylcyclopentanone, α-acetylbutyrolactone, ethyl cyclopentanone-2-carboxylate, methyl cyclopentanone-2-carboxylate, 3-methyl-2,4-pentanedione, 2-methyl-1,3-cyclopentanedione or a mixture of two or more thereof.

4. The hardener system according to claim 1, wherein the compound of Formula (I) is 3-methyl-2,4-pentanedione and/or 1,4-Bis(tetrahydro-2-oxo-3-furanyl)-butan-1,4-dion.

5. The hardener system according to any one of claims 1 to 4, wherein the amount of at least one compound of Formula (I) and/or compound of Formula (II) is in the range of from 5 to 80 weight-% based on the total weight of the hardener system.

6. The hardener system according to any one of claims 1 to 5, wherein the compound of Formula (III) is selected from the group consisting of saccharin, derivatives and/or salts thereof, preferalby selected from from a group consisting of saccharin, N-formylsaccharin, saccharin methacrylamide, N-fluorosaccharin, N-chlorosaccharin, N-bromosaccharin, N-iodosaccharin, lithium saccharin, sodium sacchrin, potassium saccharin, calcium saccharin, or a mixture of two or more thereof, more preferably selected from the group comprising saccharin, N-formylsaccharin, saccharin methacrylamide, N-bromosaccharin or a mixture of two or more thereof.

7. The hardener system according to any one of claims 1 to 6, wherein the amount of at least one compound of Formula (III) is in the range of from 0.001 to 10 weight-% based on the total weight of the reactive resin system.

8. The hardener system according to any one of claims 1 to 7, wherein the at least one transition metal in the form of a salt, a compound, a complex or a mixture of two or more thereof is selected from the group consisting of copper, iron, vanadium, manganese, cerium, cobalt, zirconium, bismuth, or mixtures of two or more thereof, preferably the at least one transition metal is copper in the form of a salt, a compound, a complex or a mixture of two or more thereof.

9. The hardener system according to any one of claims 1 to 8, wherein the amount of the at least one transition metal is in the range of from 0.001 to 10 weight % based on the total weight of the hardener system.

10. The hardener system according to any one of claims 1 to 9, further comprising at least one amine, preferably aromatic amine, more preferably at least one tertiary aromatic amine.

11. The hardener system according to any one of claims 1 to 10, further comprising at least one filler, preferably at least one alkaline filler.

12. A use of a hardener system according to any one of claims 1 to 11 as an initiator system for a reactive resin system based on radically polymerizable compounds.

13. The use according to claim 12, wherein the reactive resin system is one for chemical fastening.

14. A **reactive resin system,** which comprises the hardener system according to any of claims 1 to 11 and a radically polymerizable compound as a reactive resin.

15. The reactive resin system according to claim 14, wherein the radically polymerizable compound is selected from the group consisting of compounds based on urethane(meth)acrylate, compounds based on epoxy(meth)acrylate, methacrylates of alkoxylated bisphenols, compounds based on further ethylenically unsaturated compounds and combinations thereof.

16. The reactive resin system according to claim 14 or claim 15, further comprising organic and/or inorganic additives and/or fillers.

17. A **multi-component reactive resin system** with a resin component and a hardener component, wherein the resin component contains a radically polymerizable compound, a reactive diluent and at least one transition metal in the form of a salt, a compound, a complex, or combinations of two or more thereof, and the hardener component contains at least one compound of Formula (I) and/or compound of Formula (II) and at least one compound of the Formula (III).

18. The multi-component reactive resin system according to claim 17, wherein the reactive resin component and/or the hardener components further contain inorganic and/or organic additives and fillers.

19. A **use** of a reactive resin system according to any of claims 14 to 16 or of a multi-component reactive resin system according to any of claims 17 or 18 as an adhesive, coating material or molding compound.

20. The **use** of a reactive resin system according to any of claims 14 to 16 or of a multi-component reactive resin system according to any of claims 17 or 18 for fastening anchoring means in substrates.
